# EUROPÄISCHE PATENTSCHRIFT

(11) **EP 0 916 874 B1**
(45) Veröffentlichungstag und Bekanntmachung des Hinweises auf die Patenterteilung: **01.10.2003**
(21) Anmeldenummer: 98113162.6
(22) Anmeldetag: 15.07.1998
(51) Int. Cl.: F16H 55/36

(54) **Entkoppelte Riemenscheibe**
Decoupled pulley
Poulie découplée

(30) Priorität: 11.11.1997 DE 19749761
(43) Veröffentlichungstag der Anmeldung: 19.05.1999
(73) Patentinhaber: Carl Freudenberg KG, 69469 Weinheim (DE)
(72) Erfinder: Barsch, Peter, Dr., 79424 Auggen (DE); Gräber, Stefan, 79418 Schliengen (DE)

(56) Entgegenhaltungen:
- DE-A- 4 103 213
- DE-A- 4 322 710
- US-A- 4 781 659

## Beschreibung

Die Erfindung betrifft eine entkoppelte Riemenscheibe mit den Merkmalen aus dem Oberbegriff von Patentanspruch 1.

### Stand der Technik

Derartige Riemenscheiben, die aus Kupplung und Torsionsschwingungsdämpfer bestehen, sind allgemein bekannt, wobei der zweite Federkörper und die Riemenscheibe im wesentlichen in einer Radialebene angeordnet sind und der zweite Federkörper von der Riemenscheibe außenumfangsseitig umschlossen ist. Bei einer derartigen Ausgestaltung ist von Nachteil, daß für den zweiten Federkörper durch seine Anordnung radial innerhalb der Riemenscheibe bauraumbedingt nur vergleichsweise geringe Abmessungen in radialer Richtung zur Verfügung stehen und dieser dadurch nur eine vergleichsweise geringe Drehelastizität hat und während seines Betriebs unerwünscht hohen, die Gebrauchsdauer verringernden Scherspannungen ausgesetzt ist.

Aus der DE 43 22 710 A1 ist ein Riemenscheiben-Abkopplungssystem für Kolbenmotoren bekannt, welches als entkoppelte Riemenscheibe der eingangs genannten Art ausgelegt ist. Der zweite Federkörper zwischen der Nabe und der Riemenscheibe ist von der Riemenscheibe außenumfangsseitig umschlossen. Der für den zweiten Federkörper zur Verfügung stehende radiale Bauraum innerhalb der Riemenscheibe erlaubt nur eine Anordnung eines zweiten Federkörpers mit vergleichsweise geringen Abmessungen in radialer Richtung. Folglich kann nur eine vergleichsweise geringe Drehverformung zugelassen werden und während des Betriebs ist der zweite Federkörper unerwünscht hohen, die Gebrauchsdauer verringernden Scherspannungen ausgesetzt.

### Darstellung der Erfindung

Der Erfindung liegt die Aufgabe zugrunde, eine Riemenscheibe der eingangs genannten Art derart weiterzuentwickeln, daß auch bei ungünstigen Bauraumverhältnissen, die eine ausreichende Dimensionierung des zweiten Federkörpers innerhalb der Riemenscheibe in der Riemenebene nicht zulassen, ein zweiter Federkörper realisiert werden kann, der bedarfsweise wesentlich größere Abmessungen in radialer Richtung ermöglicht und dadurch eine größere Drehelastizität aufweist, bei vergleichsweise geringen Scherspannungen.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, daß die Riemenscheibe und der zweite Federkörper einander axial benachbart zugeordnet sind. Dabei ist die Riemenscheibe axial einerseits, der zweite Federkörper axial andererseits des Nabenrings angeordnet. Dadurch daß die Riemenscheibe und der zweite Federkörper einander axial benachbart zugeordnet sind, besteht die Möglichkeit, daß der zweite Federkörper einen Außendurchmesser aufweisen kann, der zumindest genau so groß ist, wie der Außendurchmesser der Lagerung der Riemenscheibe. In Abhängigkeit von den jeweiligen Gegebenheiten des Anwendungsfalles kann der Außendurchmesser des zweiten Federkörpers sogar größer sein, als der Außendurchmesser der Riemenscheibe. Durch die erfindungsgemäße Ausgestaltung der entkoppelten Riemenscheibe kann diese in ausgezeichneter Weise an die jeweiligen Gegebenheiten des Anwendungsfalles angepaßt werden. Beeinträchtigungen der Funktion und/ oder der Gebrauchsdauer durch eine nicht ausreichende Größe des zweiten Federkörpers sind daher ausgeschlossen.

Gemäß einer vorteilhaften Ausgestaltung kann es vorgesehen sein, daß der zweite Federkörper auf der dem Antrieb zugewandten Seite des Nabenrings angeordnet ist. Der Antrieb der entkoppelten Riemenscheibe erfolgt bei der beispielsweisen Verwendung in Kraftfahrzeugen durch die Kurbelwelle der Verbrennungskraftmaschine, wobei die Riemenscheibe zum Antrieb von Nebenaggregaten vorgesehen ist. Die gute Zugänglichkeit der Riemenscheibe auf der dem Antrieb abgewandten Seite des Nabenrings ist von hervorzuhebendem Vorteil.

Der Nabenring kann eine in axialer Richtung offene, im wesentlichen C-förmige Gestalt aufweisen, in der der zweite Federkörper angeordnet ist, wobei der sich in radialer Richtung erstreckende Radialvorsprung mit zumindest einer sich in Umfangsrichtung erstreckenden Durchbrechung versehen ist, die von zumindest einem sich in axialer Richtung erstreckenden Anschlagnocken der Riemenscheibe durchdrungen ist und daß der Anschlagnocken mit dem Außenumfang des zweiten Federkörpers drehfest verbunden und den umfangsseitigen Begrenzungen der Durchbrechung jeweils mit Abstand benachbart zugeordnet ist. Bevorzugt gelangen drei gleichmäßig in Umfangsrichtung verteilte Anschlagnocken zur Anwendung, die eine entsprechende Anzahl von Durchbrechungen durchdringen. Im herstellungsbedingten Zustand der entkoppelten Riemenscheibe befinden sich die Anschlagnocken bevorzugt in Umfangsrichtung mittig zwischen den umfangsseitigen Begrenzungen der Durchbrechungen. Auch während des planmäßigen Betriebs der entkoppelten Riemenscheibe berühren die Anschlagnocken die umfangsseitigen Begrenzungen der Durchbrechungen nicht. Die Anschlagnocken, die in die Durchbrechungen eingreifen, bilden eine Ausfallsicherung, falls der zweite Federkörper versagt.

Wird beispielsweise der zweite Federkörper während des Betriebs der entkoppelten Riemenscheibe beschädigt und/oder zerstört, weist die beanspruchte Riemenscheibe gute Notlaufeigenschaften auf. Die Anschlagnocken bewegen sich bei einer Zerstörung des zweiten Federkörpers an eine Begrenzung der Durchbrechung, wobei die Riemenscheibe dann durch die formschlüssige Verbindung der Anschlagnocken mit den Begrenzungen der Durchbrechungen vom Nabenring mitgenommen wird. Eine Berührung der Anschlagnocken mit den umfangsseitigen Begrenzungen der Durchbrechungen erfolgt demnach nur bei Extremauslenkungen.

Der Radialvorsprung kann auf der dem Antrieb abgewandten Seite mit einem sich in axialer Richtung erstreckenden Axialvorsprung versehen sein, auf dem die Riemenscheibe relativ verdrehbar gelagert ist. Die Riemenscheibe ist bevorzugt durch ein Gleitlager auf dem Axialvorsprung abgestützt. Durch die Verwendung des Gleitlagers auf dem Axialvorsprung, der als Stützflansch für die Riemenscheibe ausgebildet ist, ist die radiale Weite der Einheit, bestehend aus Axialvorsprung, Gleitlager und Riemenscheibe vergleichsweise gering, bezogen auf die Verwendung einer Wälzlagerung.

Um eine geringe mechanische Beanspruchung des zweiten Federkörpers sowie eine große Drehelastizität bei nur geringen Scherspannungen sicherzustellen, ist von Vorteil, wenn die Durchbrechung radial außerhalb des Axialvorsprungs angeordnet ist. Hierdurch lassen sich große radiale Ausdehnungen des zweiten Federkörpers verwirklichen. Die C-förmige Gestalt des Nabenrings ist dabei vom zweiten Federkörper - in radialer Richtung betrachtet - nahezu vollständig ausgefüllt.

Der zweite Federkörper ist bevorzugt radial innen- und außenseitig von jeweils einem Ring aus zähhartem Werkstoff, bevorzugt einem metallischen Werkstoff, haftend umschlossen, wobei der Innenring auf die radial innenseitige Begrenzungswand des Nabenrings aufgepreßt ist und wobei der Außenring außenseitig zur drehfesten, kraft- und/ oder formschlüssigen Aufnahme des Anschlagnockens mit einer Ausnehmung versehen ist. Der zweite Federkörper ist bevorzugt mit den in radialer Richtung anschließenden Ringen vulkanisiert. Der zweite Federkörper und die beiden Ringe bilden eine vormontierbare Einheit, die auf die innenseitige Begrenzungswand des Nabenrings beispielsweise aufgepreßt oder aufgeschrumpft ist. Zur Herstellung einer drehelastischen Verbindung zwischen der Riemenscheibe und dem zweiten Federkörper sind die einstückig mit der Riemenscheibe ausgebildeten Anschlagnocken drehfest mit dem Außenring verbunden.

Der erste und der zweite Federkörper bestehen jeweils aus einem elastomeren Werkstoff, die bevorzugt voneinanderabweichende Gebrauchseigenschaften aufweisen und dadurch in guter Weise an die jeweiligen Anwendungsfälle angepaßt sind. Die Härte Shore A des zweiten Federkörpers ist deutlich geringer, als die Härte Shore A des ersten Federkörpers.

Der Nabenring ist bevorzugt als metallisches Gußteil ausgeführt und einstückig ineinanderübergehend und materialeinheitlich mit dem Axialvorsprung ausgebildet. Durch eine derartige Ausgestaltung ist ein einfacher und teilearmer Aufbau der Riemenscheibe gegeben, was in fertigungstechnischer Hinsicht und im Hinblick auf eine einfache Montage von Vorteil ist. Davon abweichende Ausgestaltungen, bei denen der Axialvorsprung als separates Einzelteil hergestellt und anschließend mit dem Nabenring verbunden ist, sind ebenfalls denkbar.

### Kurzbeschreibung der Zeichnungen

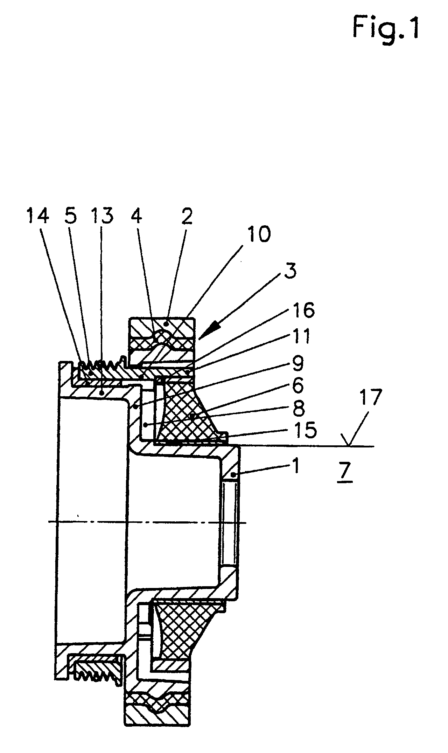

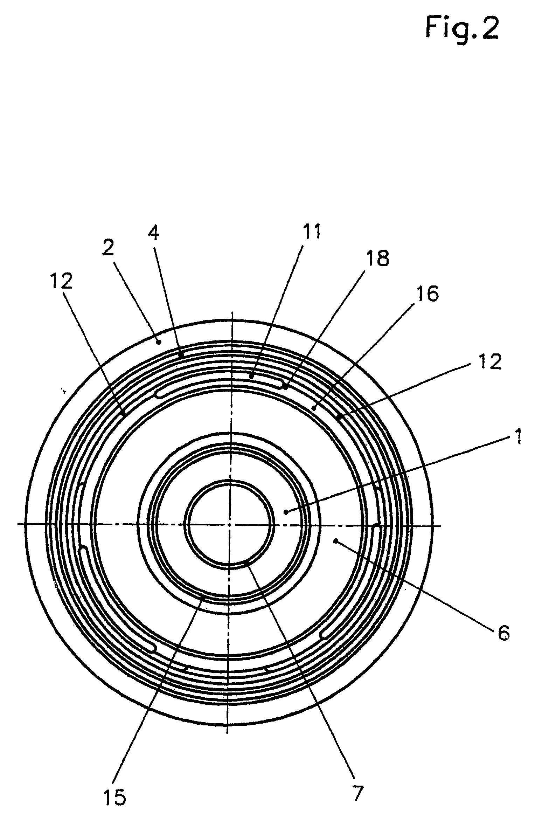

Ein Ausführungsbeispiel der entkoppelten Riemenscheibe ist nachfolgend anhand der Figuren 1 und 2 näher erläutert.

Die Figuren 1 und 2 zeigen:
In Figur 1: Eine entkoppelte Riemenscheibe in geschnittener Darstellung.
In Figur 2: Das Bauteil aus Figur 1 in einer Ansicht von rechts.

### Ausführung der Erfindung

In den Figuren 1 und 2 ist ein Ausführungsbeispiel einer erfindungsgemäßen entkoppelten Riemenscheibe gezeigt, die im wesentlichen aus einer Kupplung und einem Torsionsschwingungsdämpfer besteht. Der Schwungring 2 umschließt den Nabenring 1 mit radialem Abstand, wobei in dem durch den Abstand gebildeten Spalt 3 der erste Federkörper 4 des Torsionsschwingungsdämpfers angeordnet ist. Der Torsionsschwingungsdämpfer ist durch den zweiten Federkörper 6 der Kupplung mit der Riemenscheibe 5 verbunden, wobei die Riemenscheibe 5 und der zweite Federkörper 6 einander axial benachbart zugeordnet sind. Dadurch, daß der zweite Federkörper 6 eine große radiale Weite aufweist, wobei der Außenumfang des zweiten Federkörpers 6 im wesentlichen die gleiche radiale Weite aufweist, wie die Riemenscheibe 5, werden unerwünscht hohe Scherspannungen innerhalb des zweiten Federkörpers 6 auch bei großen Verdreh-Amplituden der Riemenscheibe 5, bezogen auf den Nabenring 1, sicher vermieden.

In dem hier gezeigten Ausführungsbeispiel weist der Nabenring 1 eine axial in Richtung des Antriebs 7 offene, im wesentlichen C-förmige Gestalt 8 auf, in der der zweite Federkörper 6 angeordnet ist. Im Radialvorsprung 9 sind in diesem Ausführungsbeispiel drei gleichmäßig in Umfangsrichtung verteilte, sich in Umfangsrichtung erstreckende Durchbrechungen 10 versehen, die von drei gleichmäßig in Umfangsrichtung angeordneten, sich in axialer Richtung erstreckenden Anschlagnocken 11 der Riemenscheibe 5 durchdrungen sind. In dem hier gezeigten Ausführungsbeispiel ist die entkoppelte Riemenscheibe so dargestellt, daß sich die Anschlagnocken 11 mittig zwischen den Begrenzungen 12 der Durchbrechungen 10 befinden.

Der zweite Federkörper 6 ist innenseitig mit einem Innenring 15 und außenseitig mit einem Außenring 16 vulkanisiert, die aus einem metallischen Werkstoff bestehen. Der Innenring 15 ist auf die innere Begrenzungswand 17 des Nabenrings 1 aufgepreßt und dadurch drehfest mit dem Nabenring 1 verbunden. Der Außenring 16 weist außenumfangsseitig drei gleichmäßig in Umfangsrichtung verteilte Ausnehmungen 18 auf, mit einer zu den Anschlagnocken 11 kongruenten Gestalt. Durch diese formschlüssige Verbindung zwischen den Anschlagnocken 11 und dem Außenring 16 ist die Riemenscheibe 5 drehelastisch zum Nabenring 1 angeordnet.

Die Riemenscheibe 5 ist in diesem Ausführungsbeispiel als Gußteil ausgeführt und auf der dem Antrieb 7 abgewandten Seite des Radialvorsprungs 9 mit einem Axialvorsprung 13 versehen, der einstückig ineinanderübergehend und materialeinheitlich mit dem Nabenring 1 ausgeführt ist. Der Axialvorsprung 13 ist außenumfangsseitig von der Riemenscheibe 5 mit radialem Abstand umschlossen, wobei in dem durch den Anstand gebildeten Spalt ein Gleitlager 14 angeordnet ist.

In Figur 2 sind die in die Ausnehmung 18 des Außenrings 16 eingelassenen Anschlagnocken 11 gut zu erkennen, und deren formschlüssige Verbindung, ebenso, wie die umfangsseitigen Begrenzungen 12 der Durchbrechungen 10.

## Patentansprüche

1. Entkoppelte Riemenscheibe mit einem Nabenring (1) und einem konzentrisch mit radialem Abstand unter Bildung eines Spaltes (3) angeordneten Schwungring (2), wobei im Spalt (3) ein erster Federkörper (4) angeordnet ist und die Riemenscheibe (5) über einen zweiten Federkörper (6) zur Entkopplung der Riemenscheibe (5) drehelastisch dem Nabenring (1) verbunden ist, **dadurch gekennzeichnet, dass** der zweite Federkörper (6) axial beabstandet zur Riemenscheibe (5) unter Zwischenlage eines sich in radialer Richtung erstreckenden Radialvorsprungs (9) des Nabenrings (1) angeordnet ist und Durchbrechungen (10) im Radialvorsprung (9) des Nabenrings (1) vorgesehen sind, die von sich in axialer Richtung erstreckenden Anschlagnocken (11) der Riemenscheibe (5) durchdrungen sind.

2. Entkoppelte Riemenscheibe nach Anspruch 1, **dadurch gekennzeichnet, daß** der zweite Federkörper (6) auf der dem Antrieb (7) zugewandten Seite des Nabenrings (1) angeordnet ist.

3. Entkoppelte Riemenscheibe nach einem der Ansprüche 1 oder 2, **dadurch gekennzeichnet, daß** der Nabenring (1) eine in axialer Richtung offene, im wesentlichen C-förmige Gestalt (8) aufweist, in der der zweite Federkörper (6) angeordnet ist, und daß die sich in axialer Richtung erstreckenden Anschlagnocken (11) der Riemenscheibe (5) mit dem Außenumfang des zweiten Federkörpers (6) drehfest verbunden und den umfangsseitigen Begrenzungen (12) der Durchbrechungen (10) jeweils mit Abstand benachbart zugeordnet sind.

4. Entkoppelte Riemenscheibe nach einem der Ansprüche 1 bis 3, **dadurch gekennzeichnet, daß** der Radialvorsprung (9) auf der dem Antrieb (7) abgewandben Seite mit einem sich in axialer Richtung erstreckenden Axialvorsprung (13) versehen ist, auf dem die Riemenscheibe (5) relativ verdrehbar gelagert ist.

5. Entkoppelte Riemenscheibe nach Anspruch 4, **dadurch gekennzeichnet, daß** die Riemenscheibe (5) durch ein Gleitlager (14) auf dem Axiaivorsprung (13) abgestützt ist.

6. Entkoppelte Riemenscheibe nach einem der Ansprüche 1 bis 5, **dadurch gekennzeichnet, daß** die Durchbrechungen (10) radial außerhalb des Axialvorsprungs (13) angeordnet sind.

7. Entkoppelte Riemenscheibe nach einem der Ansprüche 1 bis 6, **dadurch gekennzeichnet, daß** der zweite Federkörper (6) radial innenund außenseitig von jeweils einem Ring (15, 16) aus zähhartem Werkstoff haftend umschlossen ist, daß der Innenring (15) auf die radial innenseitige Begrenzungswand (17) des Nabenrings (1) aufgepreßt ist, und daß der Außenring (16) außenseitig zur drehfesten, kraft- und/oder formschlüssigen Aufnahme der Anschlagnocken (11) mit Ausnehmungen (18) versehen ist.

8. Entkoppelte Riemenscheibe nach einem der Ansprüche 1 bis 7, **dadurch gekennzeichnet, daß** der erste und zweite Federkörper (4, 6) jeweils aus einem elastomeren Werkstoff bestehen.

9. Entkoppelte Riemenscheibe nach einem der Ansprüche 1 bis 8, **dadurch gekennzeichnet, daß** der Nabenring (1) als metallisches Gußteil ausgeführt und einstückig ineinander übergehend und materialeinheitlich mit dem Axialvorsprung (13) ausgebildet ist.

## Claims

1. A decoupled pulley having a hub ring (1) and a flywheel (2) arranged concentrically at a radial distance forming a gap (3), a first spring body (4) being arranged in the gap (3) and the pulley (5) being connected to the hub ring (1) via a second spring body (6) to decouple the pulley (5) in a torsionally elastic manner, **characterized in that** the second spring body (6) is arranged axially spaced apart from the pulley (5) with a radial projection (9) of the hub ring (1) extending in the radial direction being positioned in between, and openings (10) are provided in the radial projection (9) of the hub ring (1), the said openings being penetrated by stop cams (11) of the pulley (5) extending in the axial direction.

2. A decoupled pulley according to claim 1, **characterized in that** the second spring body (6) is arranged on that side of the hub ring (1) which faces the drive (7).

3. A decoupled pulley according to either of claims 1 and 2, **characterized in that** the hub ring (1) has an essentially C-shaped form (8) which is open in the axial direction and in which the second spring body (6) is arranged, and **in that** the stop cams (11) of the pulley (5) which extend in the axial direction are connected in a rotationally fixed manner to the outer circumference of the second spring body (6) and are assigned to the circumferential boundaries (12) of the openings (10) in each case adjacent to them at a distance.

4. A decoupled pulley according to any one of claims 1 to 3, **characterized in that** the radial projection (9) is provided on the side facing away from the drive (7) with an axial projection (13) which extends in the axial direction and on which the pulley (5) is mounted in a manner such that it can be rotated relative to it.

5. A decoupled pulley according to claim 4, **characterized in that** the pulley (5) is supported on the axial projection (13) by a sliding bearing (14).

6. A decoupled pulley according to any one of claims 1 to 5, **characterized in that** the openings (10) are arranged radially outside the axial projection (13).

7. A decoupled pulley according to any one of claims 1 to 6, **characterized in that** the second spring body (6) is surrounded in an adhering manner radially on the inside and outside by a respective ring (15, 16) made of toughened hard material, **in that** the inner ring (15) is pressed onto the radially inner boundary wall (17) of the hub ring (1), and **in that** the outer ring (16) is provided on the outside with recesses (18) for the rotationally fixed, frictional and/or form-fitting holding of the stop cams (11).

8. A decoupled pulley according to any one of claims 1 to 7, **characterized in that** the first and second spring bodies (4, 6) each consist of an elastomeric material.

9. A decoupled pulley according to any one of claims 1 to 8, **characterized in that** the hub ring (1) is designed as a metallic casting and is formed together with the axial projection (13) in a manner such that they merge integrally into each other and are made of the same material.

## Revendications

1. Poulie découplée comprenant une frette de roue (1) et un volant (2) disposé de manière concentrique à une distance radiale en formant une fente (3), un premier corps élastique (4) étant situé dans la fente (3) et la poulie (5) étant reliée à la frette de roue (1) d'une manière élastique permettant une torsion par la biais d'un second corps élastique (6) en vue du découplage de la poulie (5), **caractérisée en ce que** le second corps élastique (6) est situé à une distance axiale de la poulie (5) avec, intercalé entre eux, une saillie radiale (9) de la frette de roue (1) qui s'étend dans la direction radiale, et la saillie radiale (9) de la frette de roue (1) est pourvue de découpures (10) qui sont traversées par des cames de butée (11) de la poulie (5) qui s'étendent dans la direction axiale.

2. Poulie découplée selon la revendication 1, **caractérisée en ce que** le second corps élastique (6) est situé sur le côté de la frette de roue (1) tourné vers l'entraînement (7).

3. Poulie découplée selon l'une des revendications 1 ou 2, **caractérisée en ce que** la frette de roue (1) a essentiellement la forme d'un C (8) ouvert dans la direction axiale et dans lequel est situé le second corps élastique (6) et **en ce que** les cames de butée (11) de la poulie (5) s'étendant dans la direction axiale sont reliées de manière fixe en rotation à la circonférence externe du second corps élastique (6) et sont conjuguées voisines des limitations (12) des découpures (10) sur le côté de la circonférence, à chaque fois à une distance de celles-ci.

4. Poulie découplée selon l'une des revendications 1 à 3, **caractérisée en ce que** la saillie radiale (9) est pourvue, sur le côté éloigné de l'entraînement (7), d'une saillie axiale (13) s'étendant dans la direction axiale et sur laquelle la poulie (5) est montée d'une manière permettant une torsion relative.

5. Poulie découplée selon la revendication 4, **caractérisée en ce que** la poulie (5) est appuyée sur la saillie axiale (13) grâce à un palier lisse (14).

6. Poulie découplée selon l'une des revendications 1 à 5, **caractérisée en ce que** les découpures (10) sont situées à l'extérieur de la saillie axiale (13) dans le sens radial.

7. Poulie découplée selon l'une des revendications 1 à 6, **caractérisée en ce que** le second corps élastique (6) est entouré , sur le côté intérieur et sur le côté extérieur dans le sens radial, par une bague respective (15, 16) en matériau incassable fixée par adhérence audit second corps élastique (6), **en ce que** la bague intérieure (15) est pressée sur la paroi de limitation (17) de la frette de roue (1) située sur le côté intérieur dans le sens radial et **en ce que** la bague extérieure (16) est pourvue, sur le côté extérieur, d'évidements (18) destinés à la réception des cames de butée (11) d'une manière empêchant la torsion, par adhérence et/ou par conjugaison de forme.

8. Poulie découplée selon l'une des revendications 1 à 7, **caractérisée en ce que** le premier et le second corps élastiques (4, 6) sont formés à chaque fois d'une matière élastomère.

9. Poulie découplée selon l'une des revendications 1 à 8, **caractérisée en ce que** la frette de roue (1) est exécutée en tant que pièce moulée métallique et est exécutée dans le même matériau que la saillie axiale (13) de manière à se confondre en ne formant qu'une seule pièce avec elle.
